Europäisches Patentamt

European Patent Office

Office européen des brevets

(11) Publication number : **0 546 525 A1**

## (12) EUROPEAN PATENT APPLICATION

(21) Application number : 92120998.7

(22) Date of filing : 09.12.92

(51) Int. Cl.⁵ : **G11B 7/09, G11B 7/013**

(30) Priority : **11.12.91 JP 350913/91**

(43) Date of publication of application :
**16.06.93 Bulletin 93/24**

(84) Designated Contracting States :
**DE FR GB**

(71) Applicant : **SONY CORPORATION**
**7-35, Kitashinagawa 6-chome, Chiyoda-ku**
**Tokyo (JP)**

(72) Inventor : **Endoh, Sohmei, c/o SONY**
**CORPORATION**
**7-35, Kitashinagawa 6-chome**
**Shinagawa-ku, Tokyo (JP)**

(74) Representative : **Körber, Wolfhart, Dr.rer.nat.**
**et al**
**Patentanwälte Mitscherlich & Partner,**
**Sonnenstrasse 33, Postfach 33 06 09**
**W-8000 München 33 (DE)**

(54) **Optical disc.**

(57)    An optical disc (1) includes at least one track-ing groove (G) and a plurality of pits (P) which are arranged in between the spaces divided by the tracking groove (G). A depth of tracking groove (G) from a disc surface is selected to about $\lambda/16$ to $3\lambda/16$ for a wavelength $\lambda$ of a reproducing light beam. A depth of each of the pits (P) from the disc surface is selected to about $5\lambda/16$ to $\lambda/2$ for the wavelength $\lambda$ of the reproducing light beam.

Fig.3

EP 0 546 525 A1

BACKGROUND

1. Field of the Invention

The present invention relates to an optical disc. More particularly, the present invention related to an optical disc having a recording area which is recorded data and reproduced the data and a preformat area in which data is recorded by pits.

2. Background of the Invention

A magenta-optical disc is used as a data recording medium. The magneto-optical disc has a transparent substrate, a perpendicular magnetization layer as a recording layer formed on one side surface of the substrate and a protective layer formed on the perpendicular magnetization layer. The magneto-optical disc has a large memory capacity. A large capacity of data can be recorded on or reproduced from the magneto-optical disc. In case of recording data onto the magnet-optical disc by a magnetic field modulating method, the perpendicular magnetization layer is heated to a Curie temperature or higher by a laser beam and an external magnetic field modulated by the data is applied. When a temperature of the perpendicular magnetization layer is raised to the Curie temperature or higher, a coercive force of the perpendicular magnetization layer is oriented by the direction of the external magnetic field of the modulated magnetic field which is applied in this instance. As a result, the data is recorded on the magenta-optical disc. In case of reproducing the data from the magneto-optical disc, the laser beam is irradiated to the perpendicular magnetization layer and the data is reproduced change in polarization component of the beam of the reflected light beam by a Kerr effect. In such a magneto-optical disc, an area (hereinafter, referred to as a preformat area) in which information such as address, sync, or the like is recorded by physical pits, for example, patterns of concave and convex shapes is provided in addition to an area (hereinafter, referred to as a recording area) in or. from which user data is magneto-optically recorded and reproduced. A signal of the physical pits is reproduced on the basis of the level of the reflected light beam from the magenta-optical disc.

A continuous servo method is known as a tracking servo method of such a magneto-optical disc. In this case, pregrooves are formed on the magenta-optical disc arranged in a spiral or coaxial circles. The continuous servo method uses two photodetectors which are formed bi being divided in the tangential direction of a recording track formed on the magneto-optical disc. The two photodetecters receive the reflected light beam from the magneto-optical disc. In the continuous servo method, the tracking servo is executed by using the signal detected the pregrooves. That is, in the continuous servo method, a tracking error signal which is obtained from a push-pull signal as a difference signal between the output signals from the two photodetectors.

As mentioned above, the recording area in which no pit is formed on the land between the pregrooves and the preformat area in which pits are previously formed on the land are provided for the magneto-optical disc. The push-pull signals are influenced by the form of the pregrooves and are also influenced by the form, the duty ratio or other condition of the pits which are recorded on the land. As a result, according to the conventional magneto-optical disc, the characteristics of the push-pull signal from the preformat area in which the pits are previously formed on the land area different from the those from the recording area in which no pit is formed on the land. Therefore, there is a problem such that a stable servo control cannot be performed.

An another type of an optical disc has been put into practical use. This optical disc has a read only area (ROM are) which is recorded on data by physical pits, for example, pattern of concave and convex shapes, and a recording area(RAM area) which can be magneto-optically recorded the data and optically reproduced the data. The ROM area and the RAM area are arranged in one optical disc. Such the mixed type of the optical disc can be used in the case where an operation system, application programs, and dictionary data are recorded in the ROM area and user data is recorded in the RAM area. Even in case of such the mixed type optical disc, characteristics of the push-pull signal from the ROM area in which pits are previously formed on the land area different from those from the RAM area in which no pit is formed on the land in a manner similar to the magneto-optical disc mentioned above, so that there is a problem such that a stable servo control cannot be executed.

SUMMARY OF THE INVENTION

It is, therefore, an object of the present invention to provide an optical disc which can obtain push-pull signals of similar characteristics irrespective of the presence or absence of physical pits which are arranged on the land or a duty ratio of the pits.

According to a first embodiment of the present invention, there is provided an optical disc having at least one tracking guide and a plurality of pits which are arranged in the space divided by the tracking guides. A depth of the tracking guide from the disc surface is selected to about $\lambda/16$ to $3\lambda/16$ for a wavelength $\lambda$ of a reproducing light beam. A depth of each of the pits from the disc surface is selected to about $5\lambda/16$ to $\lambda/2$ for the wavelength $\lambda$ of the reproducing light beam.

According to a second embodiment of the present invention, there is provided an optical disc having first patterns and second patterns. The first patterns guides recording and/or reproducing light beam and includes a plurality of predetermined length patterns which are arranged in a spiral or coaxial circles. A depth of the first patterns from the disc surface are about $\lambda/16$ to $3\lambda/16$ for a wavelength $\lambda$ of the recording and/or a reproducing light beam. The second patterns are used recording on or reproducing from data. The second patterns including a plurality of pits. A depth of the second patterns from the disc surface are about $5\lambda/16$ to $\lambda/2$ for the wavelength $\lambda$ of the recording and/or the reproducing light beam.

According to a third embodiment of the present invention, there is provided an optical disc having a first area which includes a plurality of pits and a second are includes at least one tracking guide. The pits are formed related to predetermined data. A depth of the pits of the first area from the disc surface being about $\lambda/16$ to $3\lambda/16$ for a wavelength $\lambda$ of the light beam irradiated to the optical disc. The tracking guide of the second are is arranged in a spiral or coaxial circles. The second area is recorded on data in accordance with the tracking guide. A depth of the tracking guide of the second area from the disc surface is about $5\lambda/16$ to $\lambda/2$ for the wavelength $\lambda$ of the light beam irradiated the optical disc.

In the optical disc thus constituted in accordance with the present invention, the depth of the tracking guide from the disc surface is selected to about $\lambda/16$ to $3\lambda/16$ for the wavelength of the reproducing light beam and the depth of the each of the pits from the disc surface is selected to about $5\lambda/16$ to $\lambda/2$ for the wavelength of the reproducing light beam, so that almost constant push-pull signals can be obtained irrespective of the presence of the pits or a duty ratio of the pits. As a result, the similar push-pull signal amounts can be obtained even in the preformat area having the pit P and the recording area having no pit P and the tracking control can be stabilized.

BRIEF DESCRIPTION OF THE DRAWING

The invention will be more readily understood with reference to the accompanying drawing, wherein:

FIGURE 1 shows an optical disc to which the present invention can be applied.

FIGURE 2 shows arrangement of pits and grooves of the optical disc to which the present invention can be applied.

FIGURE 3 shows a plan view and its cross sectional view of a preformat area of an optical disc of a embodiment of the present invention.

FIGURE 4 shows a plan view and its cross sectional view of a recording area of the optical disc of the embodiment of the present invention.

FIGURE 5 shows the result of the measurement of a push-pull signal level and a traverse signal level.

FIGURE 6 shows a plan view and its cross sectional view of a idealized optical disc used for explaining the present invention.

FIGURE 7 shows a cross sectional view of the optical disc and its waveform of a push-pull signal.

FIGURE 8 shows a cross sectional view of the optical disc and its waveform of a push-pull signal.

FIGURE 9 shows waveforms of push-pull signals when the depth of a pregroove of the optical disc is changed.

FIGURE 10 shows a cross sectional view of an optical disc to which the present invention can be applied.

FIGURE 11 shows a plan view of an another type of an optical disc which is applied to the present invention.

FIGURE 12 shows a enlarged plan view of an another type of an optical disc which is applied to the present invention.

DESCRIPTION OF THE INVENTION

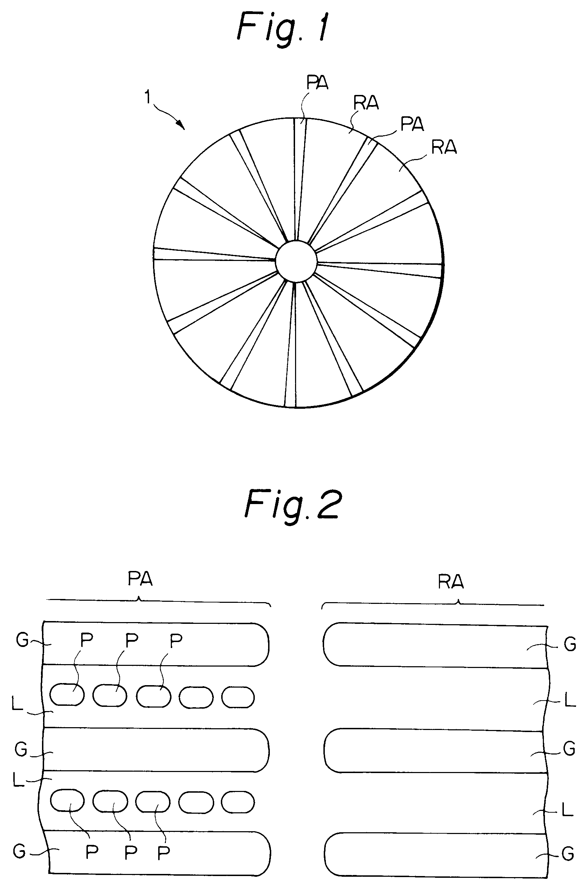

An embodiment of the invention will be explained hereinbelow with reference to the drawings. FIGURE 1 shows an optical disc to which the invention can be applied. In FIGURE 1, a recording area RA which is recorded data and reproduced the data and a preformat area PA in which address signals, sync signals, or the like is recorded are provided for a magneto-optical disc 1.

A perpendicular magnetization layer is formed in the recording area RA by using a method such as evaporation deposition or the like method. The recording and reproduction of data are executed in the recording area RA by the orientation of the magnetization of the perpendicular magnetization layer. That is, as shown in FIGURE 2, pregrooves G are formed in the recording area RA along both sides of a land L. Data is recorded in the performat area PA by physical pits, for example, patterns of concave and convex shapes, bumps or the like. Namely, as shown in FIGURE 2, in the preformat area PA, the physical pits P are formed on the land L in accordance with the recording data. The pregrooves G are formed along the land L.

According to such the magneto-optical disc 1, a tracking servo control is executed by using a fact that a diffraction light amount of the reflected light beam from the pregroove G of a light beam irradiated to the magneto-optical disc 1 changes in accordance with a tracking error amount. In this case, two photodetectors are used which are arranged between a tangential direction of the pregrooves G. The divided line of the two photodetectors are parallel to the tangential direction of the pregrooves G. These two detectors receive the reflected light beam from the magneto-optical disc 1. The tracking error signal can be obtained from a push-pull signal as a difference signal between detecting output signals from the two photodetectors.

The recording area RA in which no pit is formed on the land L and preformat area PA in which the pits P are formed on the land L are provided on the magneto-optical disc 1. The push-pull signal to obtain the tracking error signal is influenced by the pits P on the land L. As a result, the push-pull signals in the recording area RA in which no pit P is formed on the land L and the preformat area PA in which the pits P are formed on the land L are different, so that there is a possibility such that the stable servo control cannot be executed.

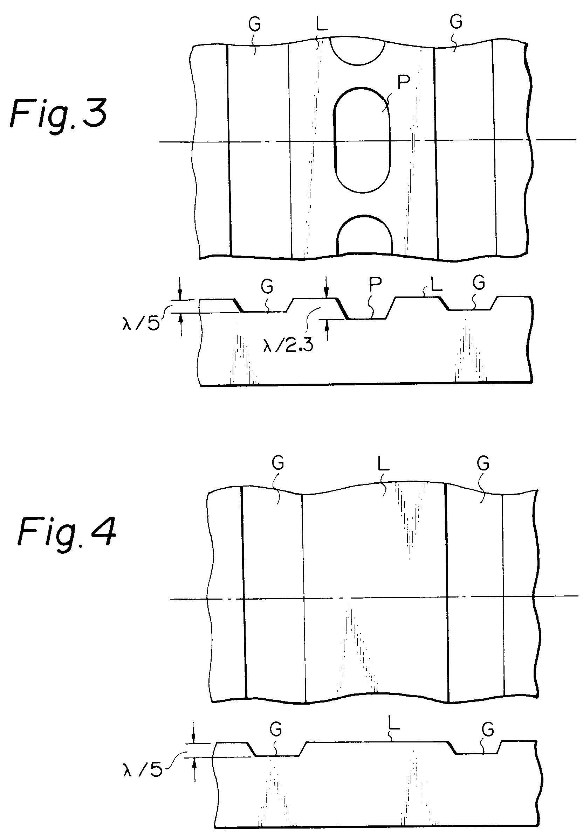

According to the embodiment of the invention, therefore, as shown in FIGURES 3 and 4, a depth of pregroove G is set to, for example, $\lambda/5$ ($\lambda$ is a wave-length of a reproducing light beam) and a depth of pit P is set to, for example, $\lambda/2.3$. FIGURE 3 shows a shape of the preformat area PA a and FIGURE 4 shows a shape of the recording area RA. When the depths of the pregroove G and pit P are selected as mentioned above, the push-pull signals of the similar characteristics can be obtained even in the recording area RA in which no pit is formed on the land L and in the preformat area PA in which pits are previously formed on the land L.

An explanation will be made hereinbelow with respect to a fact that when the depth of pregroove G is selected to, for example, $\lambda/5$ and the depth of pit P is selected to, for example, $\lambda/2.3$, the push-pull signals of the similar characteristics can be derived even in the recording area RA in which no pit is formed on the land L and in the preformat area PA in which pits are formed on the land L as mentioned above.

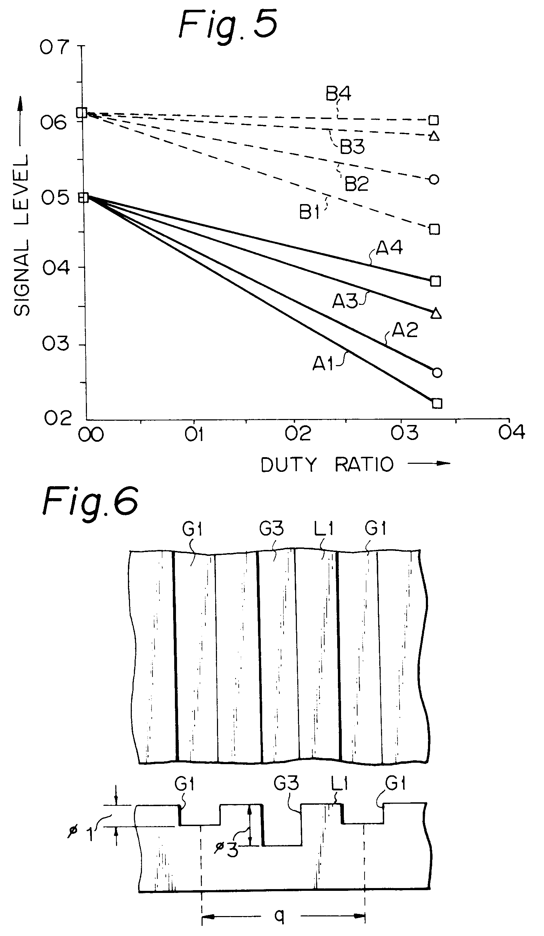

FIGURE 5 shows the results of the measurement of states in which the push-pull signal level and the traverse signal level change when the duty ratio of the pits P which are formed on the land L is changed. In FIGURE 5, an axis of abscissa shows the duty ratio of the pits P and an axis of ordinate shows the push-pull signal level and the level of the sum signal of the detection outputs from the two photodetectors which are obtained when the light beam irradiated by an optical head apparatus transverses recording tracks which are formed on the magneto-optical disc 1, namely, the traverse signal level. In the example, the wavelength of the light beam irradiated from the opt-ical head apparatus $\lambda = 830$ nm, a numerical aperture NA = 0.5, an aperture/beam intensity ratio A/W = 0.75, and a depth $\phi$ of the pregroove = $\lambda/5$. In FIGURE 5, each reference character shows the following characteristics.

A1 : traverse signal when the depth of pit is equal to $\lambda/4$
B1 : push-pull signal when the depth of pit is equal to $\lambda/4$
A2 : traverse signal when the depth of pit is equal to $\lambda/3$

B2 : push-pull signal when the depth of pit is equal to $\lambda/3$
A3 : traverse signal when the depth of pit is equal to $\lambda/2.5$
B3 : push-pull signal when the depth of pit is equal to $\lambda/2.5$
A4 : traverse signal when the depth of a pit is equal to $\lambda/2.3$
B4 : push-pull signal when the depth of pit is equal to $\lambda/2.3$

As will be understood from the characteristics in FIGURE 5, in the case where the depth of pregroove is set to $\lambda/5$, when the depth of pit is set to $\lambda/2.3$ (char-acteristic shown in B4). In the result, an almost constant push-pull signal can be obtained irrespective of the duty ratio of the pits P.

The above point will be described as follows. FIGURE 6 shows an idealized cross sectional view of an optical disc. In this optical disc as shown in FIGURE 6, a groove G3 is formed on a land L1 and grooves G1 are formed on both sides of the groove G3 for simplicity of explanation. In this optical disc, the groove G3 corresponds to the pit P and the groove G1 corresponds to the groove G. It is now assumed that a depth of the groove G1 is set to $\phi$1 and a depth of the groove G3 is set to $\phi$3. A track pitch is set to q and a width of each of the grooves is set to q/4.

When the numerical aperture NA lies within a range of 0.5 - 0.55, only the 0th-order light and the a pair of the first-order lights overlap on the pupil of an optical head apparatus. Therefore, a push-pull sig-nal amount $I_{pp}$ can be obtained by the following equa-tion

$$I_{pp} = C \{\sin 2\phi 1 - \sin 2\phi 3 - \sin 2(\phi 3 - \phi 1)\} \quad (1)$$

from the theory of Hopkins when the numerical aperture NA is set to NA $\geq$ 0.5. C is a constant which is determined by the optical system of the optical head apparatus.

No pit P is formed in the recording area RA. This corresponds to that the depth $\phi$3 of the groove G3 is equal to $\phi$3 = 0. When $\phi$3 = 0 in the above equation,

$$I_{pp} = 2C \sin 2\phi 1 \quad (2)$$

From the above equation, when

$$2\phi 1 = \pi/2 \quad (3)$$

the push-pull signal amount $I_{pp}$ becomes maximum. Since

$$2\pi = \lambda \quad (4)$$

the push-pull signal amount $I_{pp}$ becomes maximum when the depth $\phi$1 of groove G1 is

$$\phi 1 = \pi/8 \quad (5)$$

The maximum value in the instance is

$$I_{pp} = 2C \quad (6)$$

Even when the depth $\phi$3 of groove G3 is set to $\phi$3 = $3\lambda/8$ and the depth of the groove G1 is set to $\phi$1 = $\lambda/8$, the push-pull signal amount $I_{pp}$ is

$$I_{pp} = C\left\{1 - (-1) - 0\right\}$$
$$= 2C \qquad (7)$$

As shown in the equation (6), a push-pull signal amount $1_{pp}$ similar to that in the case where the depth $\phi3$ of the groove G3 is set to $\phi3 = 0$ and the depth $\phi1$ of the groove G1 is set to $\phi1 = \lambda/8$ is obtained.

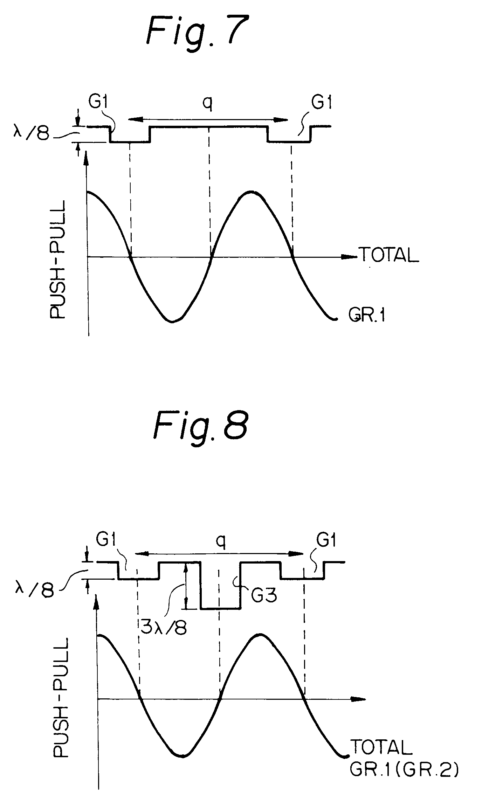

From the analysis of the idealized optical disc mentioned above, as shown in FIGURES 7 and 8, in the case where the groove of depth $\lambda/8$ is provided as a groove G1 for tracking, even in the case where no groove is formed in the land L as shown in FIGURE 7 and the case where the groove G3 of the depth $3\lambda/8$ is formed in the land L as shown in FIGURE 8, it is considered that the similar push-pull signal amount $I_{pp}$ is derived.

The characteristics showing a change in push-pull signal amount $I_{pp}$ to the depth of the groove G3 change in dependence on the depth of the groove G1. By selecting the depth, corresponding to the depth of the groove G3, of pit P in accordance with the above characteristics, even in the area having the pits P and in the area having no pit P, almost similar push-pull signal amount can be obtained.

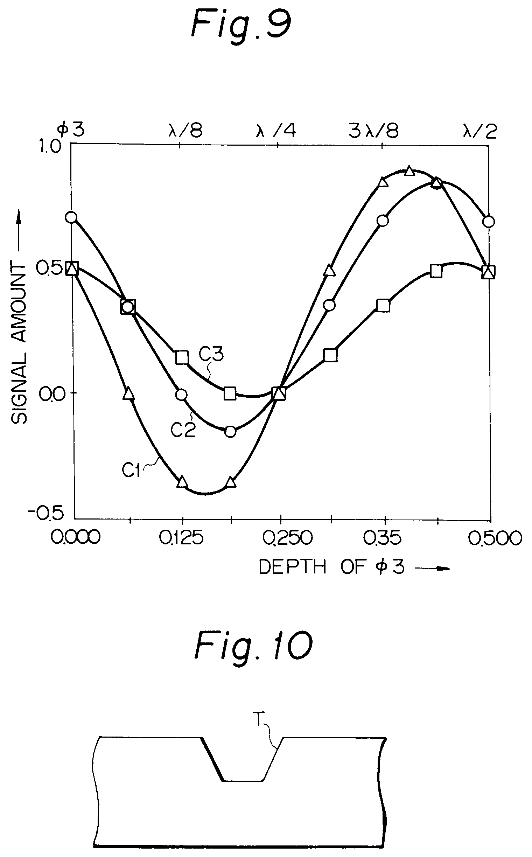

FIGURE 9 shows a change in push-pull signal amount $I_{pp}$ to the depth of the groove G3 when the depth $\phi1$ of the groove G1 is set to
$$\phi1 = \lambda/16$$
$$\phi1 = \lambda/8$$
$$\phi1 = 3\lambda/16$$
In FIGURE 9 each reference character shows the following characteristics.

C1 : Change in push-pull signal $I_{pp}$ to the depth of the groove G3 when the depth of the groove G1 is set to $\phi1 = \lambda/16$

C2 : Change in push-pull signal $I_{pp}$ to the depth of the groove G3 when the depth of the groove G1 is set to $\phi1 = \lambda/8$

C3 : Change in push-pull signal $I_{pp}$ to the depth of the groove G3 when the depth of the groove G1 is set to $\phi1 = 3\lambda/16$

As shown in the characteristics C1 in FIGURE 9, when the depth $\phi1$ of pregroove G1 is selected to $\lambda/16$, by selecting the depth $\phi3$ of pregroove G3 to a value within a range from $5\lambda/16$ to $\lambda/2$, the push-pull signal amount can be made almost constant irrespective of the presence or absence of the pregroove G3. As shown in the characteristics C2, when the depth of the pregroove G1 is selected to $\lambda/8$, by selecting the depth of the pregroove G3 to a value within a range from $3\lambda/8$ to $\lambda/2$, the push-pull signal amount can be made almost constant irrespective of the presence or absence of the pregroove G3. As shown in the characteristics C3, when the depth of the pregroove G1 is selected to $3\lambda/16$, by selecting the depth of the pregroove G3 to a value within a range from

$\lambda/16$ to $\lambda/2$, the push-pull signal amount can be made almost constant irrespective of the presence or absence of the pregroove G3 or the duty ratio of the pits P.

Cross sectional shapes of the actual pregroove G abd pit P of the magneto-optical disc 1 which is realized have a taper T in the cross sectional view as shown in FIGURE 10. Then the taper T exists as mentioned above, the depths of the groove G and pit P to obtain the similar push-pull signal amount in the area having the pits P and in the area having no pit P differ from the above theoretical values (for example, the depth of pregroove G is set to $\lambda/8$ and the depth of pit P is set to $3\lambda/8$). In the result, for example, as shown in FIGURE 5, it is considered that when the depth of pit P is set to $\lambda/2.3$, the push-pull signal amounts become almostconstant irrespective of the duty ratio of the pits P.

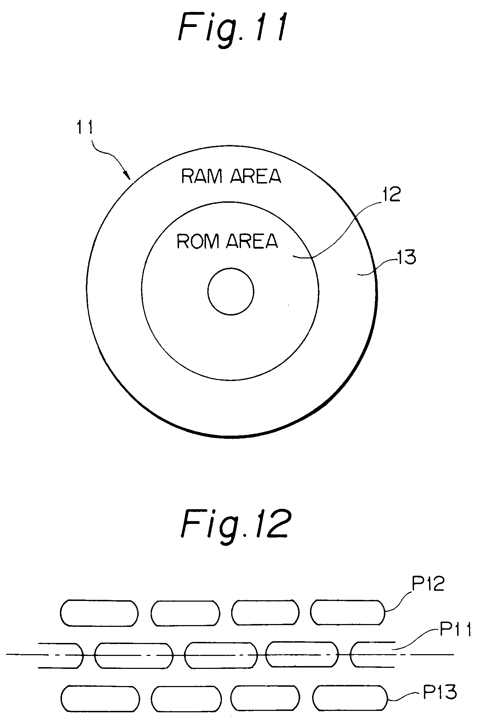

As shown in FIGURE 11, the invention can be also applied to a mixed type optical disc 11 having a ROM area 12 and a RAM area 13. In FIGURE 11, a program of an operation system and data such as dictionary data and the like have previously been recorded by physical pits into the ROM area 12. An external magnetic field is written into a perpendicular magnetization layer provided in the RAM area 13 by a thermal energy due to a light beams from an optical head apparatus. As a result, user data is recorded on the magneto-optical disc 11. The user data is reproduced by using a magneto-optical phenomenon such as a magnetical Kerr effect. In such the mixed type optical disc 11, by setting the depth of groove for tracking and the depth of pit in the ROM area 12 to the above-mentioned values, a similar push-pull signal can be obtained with respect to the ROM area 12 and the RAM area 13 can be obtained. As a result, the stable tracking control can be performed.

By setting the depths of tracking groove and pit to the above value, the push-pull signals can be obtained irrespective of the duty ratio of the pits. As a result, as shown in FIGURE 12, it is also possible to arrange a pit train as groove for servo and by arranging pit trains P12 and P13 as grooves for servo on both sides of the pit train P11. Due to this, data can be recorded or reproduced by using changes in push-pull signals from the pit trains P12 and P13 for the tracking servo.

## Claims

1. An optical disc comprising:
   at least one tracking guide (G), a depth of said tracking guide (G) from the disc surface being selected to about $\lambda/16$ to $3\lambda/16$ for a wavelength $\lambda$ of a reproducing light beam; and a plurality of pits (P) arranged in between spaces divided by said tracking guides (G), a depth of each of said pits

EP 0 546 525 A1

(P) from the disc surface being selected to about $5\lambda/16$ to $\lambda/2$ for the wavelength of the reproducing light beam.

2. An optical disc according to claim 1, wherein said depth of said tracking guides (G) is $\lambda/5$ and said depth of said pits (P) is $\lambda/2.3$.

3. An optical disc comprising:
   first patterns for guiding a recording and reproducing light beam, said first patterns including a plurality of predetermined length patterns which are arranged in spiral or coaxial circles, a depth of said first patterns from the disc surface being about $\lambda/16$ to $3\lambda/16$ for wavelength $\lambda$ of the recording and/or reproducing light beam; and
   second patterns for using recording on and/or reproducing from data, said second patterns including a plurality of pits (P), a depth of said second patterns from the disc surface being about $5\lambda/16$ to $\lambda/2$ for the wavelength of the recording and/or reproducing light beam.

4. An optical disc according to claim 3, wherein said second patterns are arranged in between each of said first patterns.

5. An optical disc according to claim 3, wherein said depth of said predetermined length patterns of said first patterns is $\lambda/5$ and said depth of said pits (P) of said second patterns is $\lambda/2.3$.

6. An optical disc comprising:
   a first area including a plurality of pits (P), said pits (P) being formed relating to predetermined data, a depth of said pits (P) of said first area from the disc surface being about $\lambda/16$ to $3\lambda/16$ for wavelength of the light beam irradiated to the optical disc (1); and
   a second area including at least one tracking guide (G), said tracking guide (G) being arranged in spiral or coaxial circles, said second area being recorded on data in accordance with said tracking guide (G), a depth of said tracking guide (G) of said second area from the disc surface being about $5\lambda/16$ to $\lambda/2$ for the wavelength of the light beam irradiated to the optical disc.

7. An optical disc according to claim 6, wherein said depth of said pits (P) of said first area is $\lambda/5$ and said depth of said tracking guide (G) of second area is $\lambda/2.3$.

# Fig. 1

# Fig.2

## Fig.3

## Fig.4

# Fig.5

# Fig.6

EP 0 546 525 A1

## Fig.7

## Fig.8

# Fig.9

# Fig.10

# Fig. 11

# Fig. 12

| European Patent Office | EUROPEAN SEARCH REPORT | Application Number<br>EP 92 12 0998 |

## DOCUMENTS CONSIDERED TO BE RELEVANT

| Category | Citation of document with indication, where appropriate,<br>of relevant passages | Relevant<br>to claim | CLASSIFICATION OF THE<br>APPLICATION (Int. Cl.5 ) |
|---|---|---|---|
| X | EP-A-0 414 429 (SONY CORP)<br>* claims 1,2; figure 3 *<br>--- | 1-5 | G11B7/09<br>G11B7/013 |
| X | US-A-4 985 881 (SAITO ET AL)<br>* column 5, line 24 - line 47; figure 3 *<br>--- | 1-5 | |
| X | DE-A-3 734 622 (RICOH CO)<br>* page 4, line 20 - page 5, line 17;<br>figure 13 *<br><br>----- | 6,7 | |
| | | | **TECHNICAL FIELDS<br>SEARCHED (Int. Cl.5 )**<br><br>G11B |

| The present search report has been drawn up for all claims | | |
|---|---|---|
| Place of search<br>THE HAGUE | Date of completion of the search<br>05 MARCH 1993 | Examiner<br>ANNTRAI P |